# EUROPÄISCHE PATENTSCHRIFT

(11) **EP 4 392 361 B1**
(45) Veröffentlichungstag und Bekanntmachung des Hinweises auf die Patenterteilung: **19.11.2025**
(21) Anmeldenummer: 22768412.3
(22) Anmeldetag: 23.08.2022
(51) Int. Cl.: C01B 3/02, C01C 1/04, F25J 3/04

(54) **AMMONIAKSYNTHESE MIT CO2-NEUTRALEM WASSERSTOFF**
AMMONIA SYNTHESIS WITH CO2-NEUTRAL HYDROGEN
SYNTHÈSE D'AMMONIAC AVEC DE L'HYDROGÈNE NEUTRE DE CO2

(30) Priorität: 25.08.2021 DE 102021209338; 25.08.2021 BE 202105673
(43) Veröffentlichungstag der Anmeldung: 03.07.2024
(73) Patentinhaber: thyssenkrupp Uhde GmbH, 44141 Dortmund (DE); thyssenkrupp AG, 45143 Essen (DE)
(72) Erfinder: ANTWEILER, Nicolai, 45147 Essen (DE); BÜKER, Karsten, 44137 Dortmund (DE); KEIL, Bernd, 44141 Dortmund (DE)
(74) Vertreter: thyssenkrupp Intellectual Property GmbH
(86) Internationale Anmeldenummer: PCT/EP2022/073396
(87) Internationale Veröffentlichungsnummer: WO 2023/025759

(56) Entgegenhaltungen:
- DE-A1- 3 233 662
- US-A- 2 166 611
- US-B1- 7 094 384

## Beschreibung

Die Erfindung betrifft eine Vorrichtung und ein Verfahren zur CO₂-neutralen Wasserstoffherstellung und anschließenden Weiterverarbeitung zu Ammoniak.

Heute wird der größte Teil des Wasserstoffs für die Ammoniaksynthese aus Methan mittels Dampfreformierung erzeugt. Aufgrund der großen Menge an hergestelltem Ammoniak hat dieses einen großen Einfluss auf die weltweiten CO₂-Emissionen.

Es ist daher wünschenswert, die CO₂ Emissionen zu reduzieren. Eine diskutierte Möglichkeit ist die Erzeugung von Wasserstoff mittels Elektrolyse mit Strom aus erneuerbaren Energiequellen, beispielsweise aus Solarstrom. Aufgrund des hohen Energiebedarfs für die elektrochemische Wasserspaltung ist dieses Verfahren jedoch energetisch ungünstig und daher vergleichsweise teuer. Es hat jedoch eine hohe Berechtigung bei der Umwandlung beispielsweise von Solarstrom beispielsweise in Ammoniak als eine leicht zu lagernde, leicht zu transportierende und leicht wieder zugänglich zu machende Energiespeicherform.

Um jedoch den hohen Bedarf insbesondere in der Düngemittelindustrie kostensensitiv bedienen zu können, ist die Suche nach Alternativen sinnvoll.

Aus der US 7 094 384 B1 ist die thermische Zersetzung von Kohlenwasserstoffen und die Synthese von Ammoniak bekannt.

Aus der WO 2002 038 499 A1 ist ein Verfahren zum Herstellen von Ammoniak aus einem Stickstoff-Wasserstoff-Gemisch aus Erdgas bekannt.

Aus der US 2019 0144768 A1 ist die Synthese von Ammoniak bekannt.

Aufgabe der Erfindung ist es, eine kostengünstige aber CO₂-freie Wasserstoffquelle für die großtechnische Ammoniaksynthese bereitzustellen.

Gelöst wird diese Aufgabe durch die Vorrichtung mit den in Anspruch 1 angegebenen Merkmalen sowie durch das Verfahren mit den in Anspruch 9 angegebenen Merkmalen. Vorteilhafte Weiterbildungen ergeben sich aus den Unteransprüchen, der nachfolgenden Beschreibung sowie den Zeichnungen.

Die erfindungsgemäße Ammoniaksynthesevorrichtung dient zur Erzeugung von Wasserstoff und zur Umsetzung des Wasserstoffs in Ammoniak. Die Ammoniaksynthesevorrichtung weist einen Konverter zur Umsetzung von Stickstoff und Wasserstoff zu Ammoniak auf. Entsprechende Konverter sind dem Fachmann bekannt und laufen üblicher Weise nach dem Haber-Bosch-Verfahren, also bei erhöhter Temperatur und hohem Druck an einem entsprechenden Katalysator. Weiter weist die Ammoniaksynthesevorrichtung eine Abtrennungsvorrichtung zur Abtrennung des Ammoniaks aus dem Gasstrom auf. Auch dieses ist aus dem klassischen Haber-Bosch-Verfahren bekannt. Die Ammoniaksynthesevorrichtung weist einen Edukteingang und einen Produktausgang auf, die Abtrennungsvorrichtung weist einen Gasgemischeingang und einen Eduktgasausgang auf. Der Produktausgang der Ammoniaksynthesevorrichtung ist mit dem Gasgemischeingang der Abtrennungsvorrichtung verbunden und der Eduktgasausgang der Abtrennungsvorrichtung ist mit dem Edukteingang der Ammoniaksynthesevorrichtung verbunden. Hierdurch wird nicht umgesetztes Gasgemisch aus Wasserstoff und Stickstoff in einem Kreis gefahren, wie auch dieses aus dem klassischen Haber-Bosch-Verfahren bekannt ist. Der Produktausgang der Ammoniaksynthesevorrichtung ist über einen ersten Wärmetauscher mit dem Gasgemischeingang der Abtrennungsvorrichtung verbunden. Hierdurch kann die bei der Ammoniaksynthese entstehende Wärme des exothermen Prozesses abgeführt werden.

Erfindungsgemäß weist die Ammoniaksynthesevorrichtung einen Pyrolysereaktor zur Umsetzung von Kohlenwasserstoff in Kohlenstoff und Wasserstoff auf. Der Pyrolysereaktor weist einen Kohlenwasserstoffeingang und einen Wasserstoffausgang auf. Der Wasserstoffausgang des Pyrolysereaktors ist mit dem Edukteingang der Ammoniaksynthesevorrichtung verbunden. Weiter ist der Eduktgasausgang der Abtrennungsvorrichtung mit dem Kohlenwasserstoffeingang des Pyrolysereaktors verbunden. In einem Pyrolysereaktor wird ein Kohlenwasserstoff in Kohlenstoff (fest) und Wasserstoff (gasförmig) aufgetrennt. Hierdurch entsteht im Gegensatz zum derzeit üblichem Verfahren der Dampfreformierung und einer anschließenden Wassergas-Shift-Reaktion kein CO₂, sondern Kohlenstoff in fester Form. Dieser kann vergleichsweise sicher gelagert werden, um so CO₂-Emissionen sicher zu vermeiden. Ebenso kann der Kohlenstoff auch in einer nicht CO₂-Emissionen verursachenden Weise weiterverwendet werden.

Da die Pyrolyse nicht vollständig abläuft, kann ein gewisser Rest an Kohlenwasserstoffen im Wasserstoffstrom verbleiben. Da anschließend in der Ammoniaksynthese ein Kreislauf zwischen dem Konverter und der Abtrennungsvorrichtung besteht, würden diese Kohlenwasserstoffe sich mit der Zeit anreichern. Um dieses Problem zu lösen wird ein Teilstrom zwischen der Abtrennungsvorrichtung und dem Konverter abgetrennt und zurück in den Pyrolysereaktor gebracht, wo die Kohlenwasserstoffe pyrolysiert werden können. Dadurch stellt sich ein geringes aber stabiles Niveau an Kohlenwasserstoffen im Ammoniaksynthesekreislauf ein.

Ein weiterer Effekt ist, dass durch die Pyrolyse im Gegensatz zur Dampfreformierung kein Kohlenmonoxid entstehen kann. Es kann daher auf eine Vorrichtung zur Umwandlung von Kohlenmonoxid in Methan zwischen dem Dampfreformer und dem eigentlichen Haber-Bosch-Prozess verzichtet werden.

In einer weiteren Ausführungsform der Erfindung ist nach dem Pyrolysereaktor und vor dem Konverter ein Methanisator angeordnet. Beispielsweise bei reinem Methan als Edukt wäre dieser nach einer Dampfreformierung üblicherweise notwendige Schritt entbehrlich, da ohne Sauerstoff kein Kohlenmonoxid als Katalysatorgift entstehen kann. Es gibt jedoch Erdgasvorkommen, die einen Anteil an Kohlendioxid und/oder Kohlenmonoxid aufweisen. Bei der Verwendung eines solchen Ausgangsstoffes wäre die Verwendung eines Methanisators zur Umsetzung von gegebenenfalls vorhandenem Kohlenmonoxid mit Wasserstoff zu Methan und Kohlendioxid sinnvoll, um den Katalysator im Konverter zu schützen.

In einer weiteren Ausführungsform der Erfindung wird der die Abtrennvorrichtung verlassende Ammoniaksyntheseeduktgasstrom mittels eines regelbaren Ventils in einen ersten Teilstrom zum Konverter und einen zweiten Teilstrom zum Pyrolysereaktor geteilt. Besonders bevorzugt ist das regelbare Ventil mit einer Steuervorrichtung verbunden, wobei die Steuervorrichtung mit einer Analysevorrichtung verbunden ist, wobei die Analysevorrichtung innerhalb des Ammoniaksyntheseeduktgasstromes zwischen der Abtrennvorrichtung und dem Konverter einschließlich des ersten Teilstromes oder innerhalb des Ammoniaksyntheseeduktgasstromes zwischen dem Konverter und der Abtrennvorrichtung angeordnet ist. Die Analysevorrichtung ist zur quantitativen Erfassung von Kohlenwasserstoffen ausgebildet. Hierbei umfasst zur quantitativen Erfassung von Kohlenwasserstoffen sowohl eine direkte Erfassung der Konzentration der Kohlenwasserstoffe als auch die Erfassung einer Größe, die mit der Konzentration der Kohlenwasserstoffe korreliert ist, beispielsweise die Wärmekapazität. Je höher die Konzentration an Kohlenwasserstoff innerhalb des Haber-Bosch-Kreislaufes ist, umso größer wird der Anteil des zweiten Teilstroms im Verhältnis zum ersten Teilstrom gewählt, indem die Steuervorrichtung das regelbare Ventil entsprechend steuert.

In einer weiteren Ausführungsform der Erfindung weist die Ammoniaksynthesevorrichtung eine Luftzerlegungsvorrichtung auf. Die Luftzerlegungsvorrichtung weist einen Stickstoffauslass auf, wobei der Stickstoffauslass der Luftzerlegungsvorrichtung mit dem Edukteingang der Ammoniaksynthesevorrichtung verbunden ist. Bevorzugt ist der Stickstoffauslass der Luftzerlegungsvorrichtung über einen Stickstoffkompressor mit dem Edukteingang der Ammoniaksynthesevorrichtung verbunden ist. Die Luftzerlegungsvorrichtung weist weiter einen Sauerstoffauslass auf. Der Sauerstoff kann entweder in anderen Prozessen genutzt oder einfach an die Umgebungsluft abgegeben werden. Bevorzugt weist die Luftzerlegungsvorrichtung eine Membran zur Luftzerlegung auf, da diese energieeffizienter als eine Luftzerlegung nach dem Linde-Verfahren ist. Alternativ könnte beispielsweise Stickstoff auch aus der Verdampfung von flüssigem Stickstoff gewonnen werden.

In einer weiteren Ausführungsform der Erfindung ist der Stickstoffauslass der Luftzerlegungsvorrichtung über eine Sauerstofffiltervorrichtung mit dem Edukteingang der Ammoniaksynthesevorrichtung verbunden. Da nach einem Pyrolyseprozess nicht sichergestellt ist, dass der Wasserstoffstrom keine Kohlenwasserstoffe enthält, wäre es kritisch, wenn Sauerstoff auch in geringer Konzentration eingebracht wird, da hierdurch Kohlenmonoxid entstehen könnte, welches wiederum als Katalysatorgift zu vermeiden ist. Eine Sauerstofffiltervorrichtung kann beispielsweise in eine große Oberfläche eines leicht korrodierenden Materials, beispielsweise eines unedlen Metalls, aufweisen. Hierdurch wird möglicher Sauerstoff chemisch an der Oberfläche gebunden. Die Wirkung kann durch ein Magnetfeld gesteigert werden, da Sauerstoff paramagnetisch und Stickstoff diamagnetisch ist.

In einer weiteren Ausführungsform der Erfindung ist der Stickstoffauslass der Luftzerlegungsvorrichtung über den ersten Wärmetauscher mit dem Edukteingang der Ammoniaksynthesevorrichtung verbunden. Auf diese Weise ist es vergleichsweise einfach möglich, den Stickstoffstrom auf die Temperatur zu bringen, die dieser bei der Zuführung zum Konverter aufweisen sollte.

In einer weiteren Ausführungsform der Erfindung ist der erste Wärmetauscher mit einem Wärmetauschfluidsystem verbunden. Der Stickstoffauslass der Luftzerlegungsvorrichtung ist über den zweiten Wärmetauscher mit dem Edukteingang der Ammoniaksynthesevorrichtung verbunden. Weiter ist der Kohlenwasserstoffeingang des Pyrolysereaktors mit einer Kohlenwasserstoffquelle verbunden, wobei der Kohlenwasserstoffeingang des Pyrolysereaktors über einen dritten Wärmetauscher mit einer Kohlenwasserstoffquelle verbunden ist. Der zweite Wärmetauscher und der dritte Wärmetauscher sind mit dem Wärmetauschfluidsystem verbunden. Hierdurch ist es möglich, die am ersten Wärmetauscher über ein Wärmetauscherfluid an den zweiten Wärmetauscher und an den dritten Wärmetauscher zu geben und so beide Eduktströme zu erwärmen.

In einer weiteren Ausführungsform der Erfindung ist der Kohlenwasserstoffeingang des Pyrolysereaktors mit einer Kohlenwasserstoffquelle verbunden, wobei der Kohlenwasserstoffeingang des Pyrolysereaktors über den ersten Wärmetauscher mit einer Kohlenwasserstoffquelle verbunden ist.

In einer weiteren Ausführungsform der Erfindung ist der Wasserstoffausgang des Pyrolysereaktors über einen ersten Kompressor mit dem Edukteingang der Ammoniaksynthesevorrichtung verbunden. Weiter ist der Eduktgasausgang der Abtrennungsvorrichtung über eine Entspannungsvorrichtung mit dem Kohlenwasserstoffeingang des Pyrolysereaktors verbunden. Der erste Kompressor ist mit der Entspannungsvorrichtung gekoppelt. Üblicherweise läuft der Haber-Bosch-Prozess unter sehr hohen Drücken, um das Gleichgewicht zum Produkt Ammoniak zu verschieben. Die Pyrolyse wird hingegen oft bei geringeren Drücken durchgeführt. Um die Energie zu nutzen, welche das in den Pyrolysereaktor zurückgeführte Gas abgibt, wenn es von hohem Druck auf ein niedrigeres Druckniveau des Pyrolysereaktors gebracht wird, koppelt man den ersten Kompressor mit der Entspannungsvorrichtung, beispielsweise über nur eine gemeinsame Achse.

In einer weiteren Ausführungsform der Erfindung ist der Pyrolysereaktor für einen Druck von 1 bar bis 20 bar und eine Temperatur von 600 °C bis 1500 °C ausgelegt. Besonders bevorzugt ist der Pyrolysereaktor für einen Druck von 2 bar bis 10 bar ausgelegt. Hinsichtlich der Temperatur gibt es verschiedene optimale Temperaturbereiche, welche auf unterschiedliche Arten der Pyrolyse zurückzuführen sind. Der Pyrolysereaktor weist bevorzugt eine Metallschmelze, ein Wanderbett oder ein Plasma auf. Diese Technologien der Pyrolyse von Kohlenwasserstoffen als technologisch reif für den großtechnischen Einsatz herausgestellt. Daher kann der Pyrolysereaktor beispielsweise für einen Temperaturbereich von 600 °C bis 900 °C ausgelegt sein. Dieses ist beispielsweise für einen Metallschmelze-Pyrolysereaktor optimal. Alternativ kann der Pyrolysereaktor auf einen Temperaturbereich von 900 °C bis 1500 °C, bevorzugt von 1200 °C bis 1500 °C, ausgelegt sein.

Besonders bevorzugt kann der Pyrolysereaktor gemäß der WO 2019/145279 A1 ausgeführt sein.

In einer weiteren Ausführungsform der Erfindung weist der Pyrolysereaktor eine elektrische Heizung auf. Hierdurch ist es möglich, unter Verwendung von Strom aus regenerativen Energiequellen CO₂-Emissionen für die Aufbringung der für die Pyrolyse benötigten Energie zu vermeiden.

In einem weiteren Aspekt betrifft die Erfindung ein Verfahren zur Synthese von Ammoniak aus einem Kohlenwasserstoff, wobei das Verfahren die folgenden Schritte aufweist:
a) Zuführen eines Kohlenwasserstoffes in einen Pyrolysereaktor,
b) Pyrolysieren des Kohlenwasserstoffs zu Kohlenstoff und Wasserstoff im Pyrolysereaktor,
c) Leiten des Wasserstoffs aus dem Pyrolysereaktor in einen Konverter,
d) Zuführen von Stickstoff zum Konverter,
e) Umsetzen des Wasserstoffs und des Stickstoffs zu Ammoniak in den Konverter,
f) Abkühlen des Ammoniaksyntheseproduktgasstromes in einem ersten Wärmetauscher,
g) Abtrennen des Ammoniaks aus dem Ammoniaksyntheseproduktgasstrom in einer Abtrennvorrichtung und Erhalt eines Ammoniaksyntheseeduktgasstromes,
h) Teilen des Ammoniaksyntheseeduktgasstromes in einen ersten Teilstrom und einen zweiten Teilstrom,
i) Leiten des ersten Teilstromes in den Konverter,
j) Leiten des zweiten Teilstromes in den Pyrolysereaktor.

Bevorzugt wird das erfindungsgemäße Verfahren auf einer erfindungsgemäßen Vorrichtung durchgeführt.

Durch die Verfahrensschritte h) und j) wird ein Teil des Ammoniaksyntheseeduktgasstromes zurückgeführt, um darin enthaltene Kohlenwasserstoffe zu zersetzen und so eine Anreicherung zu verhindern.

In einer weiteren Ausführungsform der Erfindung erfolgt die Pyrolyse in Schritt b) nicht katalytisch. Es erfolgt also bevorzugt eine rein thermische Pyrolyse.

In einer weiteren Ausführungsform der Erfindung wird in Schritt b) Methan pyrolysiert. Zum einen ist die Pyrolyse von Methan an sich vorteilhaft, zum anderen wird in der heute für die Ammoniaksynthese eingesetzten Dampfreformierung ebenfalls hauptsächlich Methan eingesetzt, sodass eine Umstellung auf das erfindungsgemäße Verfahren vergleichsweise einfach möglich ist und bei Verwendung der bestehenden Versorgungsinfrastruktur die CO₂-Emissionen deutlich zu senken vermag.

In einer weiteren Ausführungsform der Erfindung wird beim Zuführen des Kohlenwasserstoffs in Schritt a) dieser mittels der im ersten Wärmetauscher dem Ammoniaksyntheseproduktgasstrom entzogenen Energie erwärmt.

In einer weiteren Ausführungsform der Erfindung wird bei Zuführen des Stickstoffs in Schritt d) dieser mittels der im ersten Wärmetauscher dem Ammoniaksyntheseproduktgasstrom entzogenen Energie erwärmt.

In einer weiteren Ausführungsform der Erfindung wird der Wasserstoffstrom beim Leiten aus dem Pyrolysereaktor in den Konverter in Schritt c) verdichtet.

In einer weiteren Ausführungsform der Erfindung wird der zweite Teilstrom entspannt, wobei die durch das entspannen gewonnene Energie zum Verdichten des Wasserstoffstroms genutzt wird. Dieses kann bevorzugt dadurch erfolgen, dass der erste Kompressor und die Entspannungsvorrichtung beispielsweise über eine gemeinsame Welle gekoppelt sind.

In einer weiteren Ausführungsform der Erfindung werden der Pyrolysereaktor und der Konverter beim gleichen Druck betrieben. Diese Ausführungsform ist besonders bevorzugt, da auf diese Weise Energieverluste durch Kompression und Dekompression vermieden werden. Auf der anderen Seite stellt diese Ausführungsform sehr hohe Anforderungen an den Pyrolysereaktor, um eine Rußbildung in der Gasphase zu vermeiden, da durch den vergleichsweise hohen Druck und den damit geringeren mittleren Abstand der Moleküle in der Gasphase die Gefahr der Bildung von Kohlenstoffpartikeln in der Gasphase vergleichsweise hoch ist.

In einer weiteren Ausführungsform der Erfindung erfolgt das Teilen des Ammoniaksyntheseeduktgasstromes in Schritt h) in Abhängigkeit des Kohlenwasserstoffanteils des Ammoniaksyntheseeduktgasstromes. Insbesondere wird der Kohlenwasserstoffanteil im Ammoniaksyntheseeduktgasstrom oder auch im Ammoniaksyntheseproduktgasstrom direkt oder indirekt erfasst. Eine direkte Erfassung wäre beispielsweise mittels IR möglich, eine indirekte Erfassung wäre beispielsweise mittels Wärmeleitfähigkeitsmessung möglich. Je höher der erfasste Kohlenwasserstoffanteil ist, umso höher wird der Anteil des zweiten Teilstroms eingestellt.

In einer weiteren Ausführungsform der Erfindung wird der Pyrolysereaktor elektrisch beheizt. Dadurch ist die Verwendung von Energie aus einer regenerativen Energiequelle und somit ohne CO₂-Emissionen besonders einfach möglich. Besonders bevorzugt weist die Ammoniaksynthesevorrichtung hierzu eine Windkraftanlage, eine Solaranlage und einen Energiespeicher auf. Durch diesen Energiemix und die Zwischenspeicherung ist ein kontinuierlicher Betrieb vergleichswiese zuverlässig möglich. Im Bedarfsfall kann elektrische Energie aus einem öffentlichen Versorgernetz hinzugezogen werden.

In einer weiteren Ausführungsform der Erfindung wird der Kohlenstoff, welcher im Schritt b) erzeugt wird, deponiert, also endgelagert. Hierdurch wird ein Eintrag des Kohlenstoffs in Form von CO₂ in die Atmosphäre langfristig und sicher vermieden.

Nachfolgend ist die erfindungsgemäße Vorrichtung anhand von in den Zeichnungen dargestellten Ausführungsbeispielen näher erläutert.
Fig. 1 erstes Ausführungsbeispiel
Fig. 2 zweites Ausführungsbeispiel
Fig. 3 drittes Ausführungsbeispiel
Fig. 4 viertes Ausführungsbeispiel
Fig. 5 fünftes Ausführungsbeispiel
Fig. 6 sechstes Ausführungsbeispiel

Gleiche Bauteile sind in den nachfolgenden Ausführungsbeispielen jeweils mit gleichen Bezugszeichen versehen.

Das erste Ausführungsbeispiel wird im Folgenden ausführlicher beschrieben, bei den weiteren Ausführungsbeispielen wird auf die Unterschiede eingegangen.

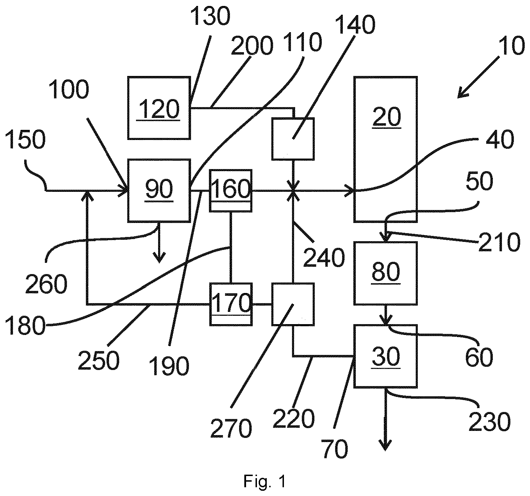

In Fig. 1 ist ein erstes Ausführungsbeispiel einer erfindungsgemäßen Ammoniaksynthesevorrichtung 10 gezeigt. Die Ammoniaksynthesevorrichtung 10 weist eine Kohlenwasserstoffquelle 150 auf, beispielsweise einen Anschluss an ein Methangasnetz. Der Kohlenwasserstoff wird über einen Kohlenwasserstoffeingang 100 in einen Pyrolysereaktor 90 geleitet und dort thermisch, beispielsweise bei 1200 °C bis 1500 °C, zu Kohlenstoff und Wasserstoff umgesetzt. Beispielsweise ist der Pyrolysereaktor als Wanderbettreaktor aufgebaut, wobei kalter Kohlenwasserstoff unten eingeleitet wird. Dieser steigt auf, während der Kohlenwasserstoff von im Gegenstrom kommenden Kohlenstoff erwärmt wird, wobei der Kohlenstoff sich wiederrum abkühlt. In der Mitte des Pyrolysereaktors 90 erfolgt eine elektrische Heizung der Kohlenstoffpartikel, die zu einer Pyrolyse des Kohlenwasserstoffs und damit zu einem Aufwachsen des Kohlenstoffs führt. Beim weiteren Aufsteigen erwärmt der Wasserstoff den entgegenkommenden Kohlenstoff, wobei der Wasserstoff vorzugsweise in die Größe der Temperatur des Haber-Bosch-Verfahrens abgekühlt wird. Der Wasserstoff verlässt den Pyrolysereaktor 90 durch den Wasserstoffausgang 110. Der Wasserstoffstrom 190 wird mit dem ersten Kompressor 160 verdichtet und dem Edukteingang 40 des Konverters 20 zugeführt. Da der Wasserstoffstrom 190 im Gegensatz zur Dampfreformierung keinen Stickstoff aufweist, wird der Stickstoff getrennt zugeführt. Dazu weist die Ammoniaksynthesevorrichtung 10 eine Luftzerlegungsvorrichtung 120 auf. Der Stickstoff verlässt die Luftzerlegungsvorrichtung 120 über den Stickstoffauslass 130. Der Stickstoffstrom wird im gezeigten Beispiel über eine optionale Sauerstofffiltervorrichtung 140 zum Edukteingang 40 des Konverters 20 geführt. Im Konverter 20 erfolgt die Umsetzung von Stickstoff und Wasserstoff zu Ammoniak. Über den Produktausgang 50 verlässt der Ammoniaksyntheseproduktgasstrom 210 den Konverter 20 und wird über der ersten Wärmetauscher 80 in die Abtrennungsvorrichtung 30 über den Gasgemischeingang 60 der Abtrennungsvorrichtung 30 zugeführt. Hier wird das Produkt Ammoniak abgetrennt und über den Ammoniakausgang 230 beispielsweise einer Harnstoffsynthese zugeführt. Übrig bleibt eine Mischung aus nicht umgesetzten Wasserstoff und nicht umgesetzten Stickstoff, welche gegebenenfalls Kohlenwasserstoffe aufweisen kann, welche im Pyrolysereaktor nicht oder nicht vollständig umgesetzt wurden. Diese Mischung verlässt als Ammoniaksyntheseeduktgasstrom 200 die Abtrennungsvorrichtung 30 über den Eduktausgang 70. Der größte Teil des Ammoniaksyntheseeduktgasstrom 200 wird als erster Teilstrom 240 direkt dem Edukteingang 40 des Konverters 20 wieder zugeführt. Ein anderer Teil des Ammoniaksyntheseeduktgasstromes 220 wird als zweiter Teilstrom 250 am Ventil 270 abgetrennt und als zweiter Teilstrom 250 dem Kohlenwasserstoffeingang 100 des Pyrolysereaktors 90 wieder zugeführt. Da die Ammoniaksynthese üblicherweise unter sehr viel höheren Drücken erfolgt, ist im zweiten Teilstrom 250 eine Entspannungsvorrichtung 170 angeordnet, welche über eine Kopplung zur Nutzung der freigewordenen Energie mit dem ersten Kompressor 160 verbunden ist. Um den Kohlenstoff aus dem Pyrolysereaktor 90 auszutragen weist dieser einen Kohlenstoffausgang 260 auf.

Wie bereits beschrieben wird im Folgenden nur noch auf die Unterscheide zum ersten Ausführungsbeispiel eingegangen.

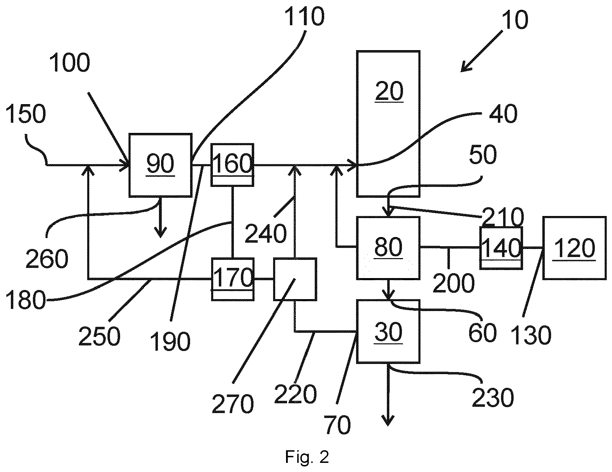

Das in Fig. 2 gezeigte zweite Ausführungsbeispiel unterscheidet sich um ersten Ausführungsbeispiel dadurch, dass der Stickstoffstrom direkt durch den ersten Wärmetauscher 80 geführt wird, und so direkt durch die Prozesswärme der Ammoniaksynthese erwärmt wird.

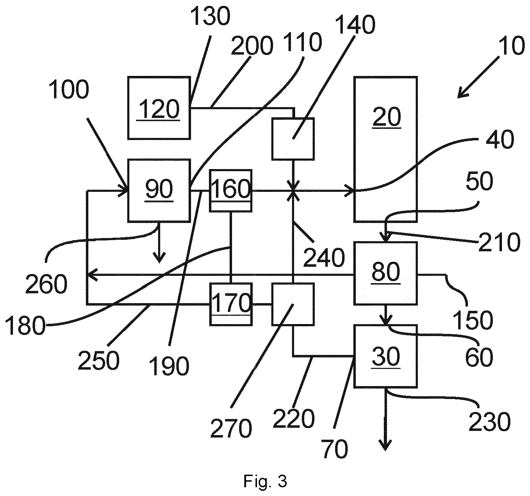

In Fig. 3 ist das dritte Ausführungsbeispiel gezeigt, bei dem der Kohlenwasserstoff aus der Kohlenwasserstoffquelle 150 direkt durch den ersten Wärmetauscher 80 geführt und so erwärmt wird. Hierdurch kann insbesondere der aus dem Kohlenstoffausgang 260 austretende Kohlenstoff vergleichsweise wärmer sein, weshalb dieser zur Erwärmung des Stickstoffstroms 200 genutzt werden könnte, was hier zur Vereinfachung jedoch nicht dargestellt ist.

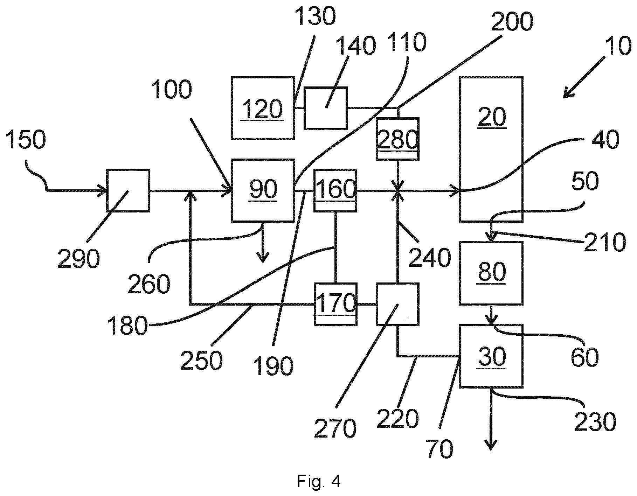

Das in Fig. 4 gezeigte vierte Ausführungsbeispiel weist zusätzlich zum ersten Ausführungsbeispiel einen zweiten Wärmetauscher 280 im Stickstoffstrom 200 und einen dritten Wärmetauscher 290 zur Erwärmung des Kohlenwasserstoffs zwischen der Kohlenwasserstoffquelle 150 und dem Pyrolysereaktor 90 auf. Der erste Wärmetauscher 80, der zweite Wärmetauscher 280 und der dritte Wärmetauscher 290 sind über ein Wärmetauschfluidsystem miteinander verbunden, welches hier zur Vereinfachung weggelassen ist. Somit kann die entstandene Prozesswärme an beide Eduktströme abgegeben werden.

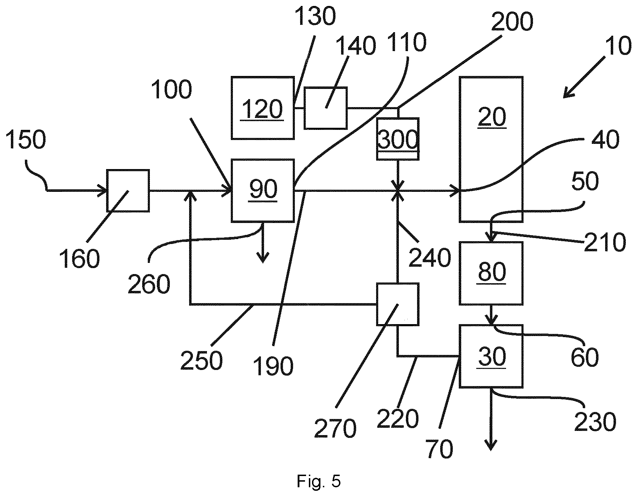

Fig. 5 zeigt ein fünftes Ausführungsbeispiel, bei dem der Pyrolysereaktor 90 auf dem gleichen Druckniveau wie der Konverter 20 arbeitet. Hierzu wurde der erste Kompressor aus dem Wasserstoffstrom 190 verschoben und ist nun zwischen der Kohlenwasserstoffquelle 150 und dem Pyrolysereaktor 90 angeordnet, die Entspannungsvorrichtung 170 und damit auch die Kopplung 180 entfallen. Zusätzlich ist im Stickstoffstrom 200 ein zweiter Kompressor 300 angeordnet, welcher vorzugsweise auch in den anderen Ausführungsbeispielen vorhanden ist.

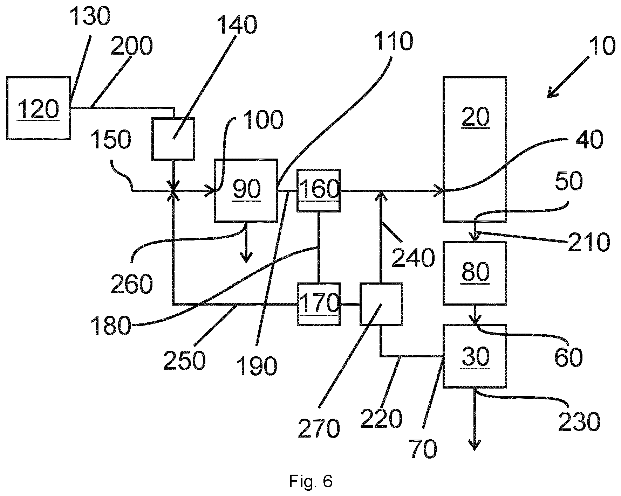

Das sechste Ausführungsbeispiel ist in Fig. 6 gezeigt und unterscheidet sich zum ersten Ausführungsbeispiel dadurch, dass der Stickstoffstrom nicht in den Wasserstoffstrom 190 und damit in den Edukteingang 40 des Konverters 20 mündet, sondern in den Kohlenwasserstoffeingang 100 des Pyrolysereaktors 90. Der Vorteil dieser Ausführungsform ist, dass dadurch die Stoßwahrscheinlichkeit zwischen Kohlenwasserstoffmolekülen und dadurch die Rußbildung reduziert werden kann. Nachteilig ist dafür, dass der Stickstoff ebenfalls mit auf die Pyrolysetemperatur erhitzt werden muss. Diese Energie kann aber am Ende des Pyrolysereaktors 90 wieder zurückgewonnen werden.

### Bezugszeichen

- 10: Ammoniaksynthesevorrichtung
- 20: Konverter
- 30: Abtrennungsvorrichtung
- 40: Edukteingang
- 50: Produktausgang
- 60: Gasgemischeingang
- 70: Eduktgasausgang
- 80: erste Wärmetauscher
- 90: Pyrolysereaktor
- 100: Kohlenwasserstoffeingang
- 110: Wasserstoffausgang
- 120: Luftzerlegungsvorrichtung
- 130: Stickstoffauslass
- 140: Sauerstofffiltervorrichtung
- 150: Kohlenwasserstoffquelle
- 160: erster Kompressor
- 170: Entspannungsvorrichtung
- 180: Kopplung
- 190: Wasserstoffstrom
- 200: Stickstoffstrom
- 210: Ammoniaksyntheseproduktgasstrom
- 220: Ammoniaksyntheseeduktgasstrom
- 230: Ammoniakausgang
- 240: erster Teilstrom
- 250: zweiter Teilstrom
- 260: Kohlenstoffausgang
- 270: Ventil
- 280: zweiter Wärmetauscher
- 290: dritter Wärmetauscher,
- 300: zweiter Kompressor

## Patentansprüche

1. Ammoniaksynthesevorrichtung (10) zur Erzeugung von Wasserstoff und zur Umsetzung des Wasserstoffs in Ammoniak, wobei die Ammoniaksynthesevorrichtung (10) einen Konverter (20) zur Umsetzung von Stickstoff und Wasserstoff zu Ammoniak aufweist, wobei die Ammoniaksynthesevorrichtung (10) eine Abtrennungsvorrichtung (30) zur Abtrennung des Ammoniaks aus dem Gasstrom aufweist, wobei die Ammoniaksynthesevorrichtung (10) einen Edukteingang (40) und einen Produktausgang (50) aufweist, wobei die Abtrennungsvorrichtung (30) einen Gasgemischeingang (60) und einen Eduktgasausgang (70) aufweist, wobei der Produktausgang (50) der Ammoniaksynthesevorrichtung (10) mit dem Gasgemischeingang (60) der Abtrennungsvorrichtung (30) verbunden ist, wobei der Eduktgasausgang (70) der Abtrennungsvorrichtung (30) mit dem Edukteingang (40) der Ammoniaksynthesevorrichtung verbunden ist, wobei der Produktausgang (50) der Ammoniaksynthesevorrichtung (10) über einen ersten Wärmetauscher (80) mit dem Gasgemischeingang (60) der Abtrennungsvorrichtung (30) verbunden ist, **dadurch gekennzeichnet, dass** die Ammoniaksynthesevorrichtung (10) einen Pyrolysereaktor (90) zur Umsetzung von Kohlenwasserstoff in Kohlenstoff und Wasserstoff aufweist, wobei der Pyrolysereaktor (90) einen Kohlenwasserstoffeingang (100) und einen Wasserstoffausgang (110) aufweist, wobei der Wasserstoffausgang (110) des Pyrolysereaktors (90) mit dem Edukteingang (40) der Ammoniaksynthesevorrichtung (10) verbunden ist, wobei der Eduktgasausgang (70) der Abtrennungsvorrichtung (30) mit dem Kohlenwasserstoffeingang (100) des Pyrolysereaktors (90) verbunden ist.

2. Ammoniaksynthesevorrichtung (10) nach Anspruch 1, **dadurch gekennzeichnet, dass** die Ammoniaksynthesevorrichtung (10) eine Luftzerlegungsvorrichtung (120) aufweist, wobei die Luftzerlegungsvorrichtung (120) einen Stickstoffauslass (130) aufweist, wobei der Stickstoffauslass (130) der Luftzerlegungsvorrichtung (120) mit dem Edukteingang (40) der Ammoniaksynthesevorrichtung (10) verbunden ist.

3. Ammoniaksynthesevorrichtung (10) nach Anspruch 2, **dadurch gekennzeichnet, dass** der Stickstoffauslass (130) der Luftzerlegungsvorrichtung (120) über eine Sauerstofffiltervorrichtung (140) mit dem Edukteingang (40) der Ammoniaksynthesevorrichtung (10) verbunden ist.

4. Ammoniaksynthesevorrichtung (10) nach einem der Ansprüche 2 bis 3, **dadurch gekennzeichnet, dass** der Stickstoffauslass (130) der Luftzerlegungsvorrichtung (120) über den ersten Wärmetauscher (80) mit dem Edukteingang (40) der Ammoniaksynthesevorrichtung (10) verbunden ist.

5. Ammoniaksynthesevorrichtung (10) nach einem der Ansprüche 2 bis 3, **dadurch gekennzeichnet, dass** der erste Wärmetauscher (80) mit einem Wärmetauschfluidsystem verbunden ist, wobei der Stickstoffauslass (130) der Luftzerlegungsvorrichtung (120) über einen zweiten Wärmetauscher (280) mit dem Edukteingang (40) der Ammoniaksynthesevorrichtung (10) verbunden ist, wobei der Kohlenwasserstoffeingang (100) des Pyrolysereaktors (90) mit einer Kohlenwasserstoffquelle (150) verbunden ist, wobei der Kohlenwasserstoffeingang (100) des Pyrolysereaktors (90) über einen dritten Wärmetauscher (290) mit einer Kohlenwasserstoffquelle (150) verbunden ist, wobei der zweite Wärmetauscher (280) und der dritte Wärmetauscher (290) mit dem Wärmetauschfluidsystem verbunden sind.

6. Ammoniaksynthesevorrichtung (10) nach einem der Ansprüche 1 bis 4, **dadurch gekennzeichnet, dass** der Kohlenwasserstoffeingang (100) des Pyrolysereaktors (90) mit einer Kohlenwasserstoffquelle (150) verbunden ist, wobei der Kohlenwasserstoffeingang (100) des Pyrolysereaktors (90) über den ersten Wärmetauscher (80) mit einer Kohlenwasserstoffquelle (150) verbunden ist.

7. Ammoniaksynthesevorrichtung (10) nach einem der vorstehenden Ansprüche, **dadurch gekennzeichnet, dass** der Wasserstoffausgang (110) des Pyrolysereaktors (90) über einen ersten Kompressor (160) mit dem Edukteingang (40) der Ammoniaksynthesevorrichtung (10) verbunden ist, wobei der Eduktgasausgang (70) der Abtrennungsvorrichtung (30) über eine Entspannungsvorrichtung (170) mit dem Kohlenwasserstoffeingang (100) des Pyrolysereaktors (90) verbunden ist, wobei der erste Kompressor (160) mit der Entspannungsvorrichtung (170) gekoppelt ist.

8. Ammoniaksynthesevorrichtung (10) nach einem der vorstehenden Ansprüche, **dadurch gekennzeichnet, dass** der Pyrolysereaktor (90) für einen Druck von 1 bar bis 20 bar und eine Temperatur von 600 °C bis 1500 °C ausgelegt ist.

9. Verfahren zur Synthese von Ammoniak aus einem Kohlenwasserstoff, wobei das Verfahren die folgenden Schritte aufweist:
a) Zuführen eines Kohlenwasserstoffes in einen Pyrolysereaktor (90),
b) Pyrolysieren des Kohlenwasserstoffs zu Kohlenstoff und Wasserstoff im Pyrolysereaktor (90),
c) Leiten des Wasserstoffs aus dem Pyrolysereaktor (90) in einen Konverter (20),
d) Zuführen von Stickstoff zum Konverter (20),
e) Umsetzen des Wasserstoffs und des Stickstoffs zu Ammoniak in dem Konverter (20),
f) Abkühlen des Ammoniaksyntheseproduktgasstromes (210) in einem ersten Wärmetauscher (80),
g) Abtrennen des Ammoniaks aus dem Ammoniaksyntheseproduktgasstrom (210) in einer Abtrennvorrichtung und Erhalt eines Ammoniaksyntheseeduktgasstromes (220),
h) Teilen des Ammoniaksyntheseeduktgasstromes (220) in einen ersten Teilstrom (240) und einen zweiten Teilstrom (250),
i) Leiten des ersten Teilstromes (240) in den Konverter (20),
j) Leiten des zweiten Teilstromes (250) in den Pyrolysereaktor (90).

10. Verfahren nach Anspruch 9, **dadurch gekennzeichnet, dass** beim Zuführen des Kohlenwasserstoffs in Schritt a) dieser mittels der im ersten Wärmetauscher (80) dem Ammoniaksyntheseproduktgasstrom (210) entzogenen Energie erwärmt wird.

11. Verfahren nach einem der Ansprüche 9 bis 10, **dadurch gekennzeichnet, dass** bei Zuführen des Stickstoffs in Schritt d) dieser mittels der im ersten Wärmetauscher (80) dem Ammoniaksyntheseproduktgasstrom (210) entzogenen Energie erwärmt wird.

12. Verfahren nach einem der Ansprüche 9 bis 11, **dadurch gekennzeichnet, dass** der Wasserstoffstrom (190) beim Leiten aus dem Pyrolysereaktor (90) in einen Konverter (20) in Schritt c) verdichtet wird.

13. Verfahren nach Anspruch 12, **dadurch gekennzeichnet, dass** der zweite Teilstrom (250) entspannt wird, wobei die durch das entspannen gewonnene Energie zum Verdichten des Wasserstoffstroms (190) genutzt wird.

14. Verfahren nach einem der Ansprüche 9 bis 11, **dadurch gekennzeichnet, dass** der Pyrolysereaktor (90) und der Konverter (20) beim gleichen Druck betrieben werden.

15. Verfahren nach einem der Ansprüche 9 bis 13, **dadurch gekennzeichnet, dass** das Teilen des Ammoniaksyntheseeduktgasstromes (220) in Schritt h) in Abhängigkeit des Kohlenwasserstoffanteils des Ammoniaksyntheseeduktgasstromes (220) erfolgt.

## Claims

1. An ammonia synthesis apparatus (10) for producing hydrogen and for converting the hydrogen into ammonia, wherein the ammonia synthesis apparatus (10) comprises a converter (20) for converting nitrogen and hydrogen into ammonia, wherein the ammonia synthesis apparatus (10) comprises a separation apparatus (30) for separating the ammonia from the gas stream, wherein the ammonia synthesis apparatus (10) has a reactant inlet (40) and a product outlet (50), wherein the separation apparatus (30) has a gas mixture inlet (60) and a reactant gas outlet (70), wherein the product outlet (50) of the ammonia synthesis apparatus (10) is connected to the gas mixture inlet (60) of the separation apparatus (30), wherein the reactant gas outlet (70) of the separation apparatus (30) is connected to the reactant inlet (40) of the ammonia synthesis apparatus, wherein the product outlet (50) of the ammonia synthesis apparatus (10) is connected to the gas mixture inlet (60) of the separation apparatus (30) via a first heat exchanger (80), **characterized in that** the ammonia synthesis apparatus (10) comprises a pyrolysis reactor (90) for conversion of hydrocarbon into carbon and hydrogen, wherein the pyrolysis reactor (90) has a hydrocarbon inlet (100) and a hydrogen outlet (110), wherein the hydrogen outlet (110) of the pyrolysis reactor (90) is connected to the reactant inlet (40) of the ammonia synthesis apparatus (10), wherein the reactant gas outlet (70) of the separation apparatus (30) is connected to the hydrocarbon inlet (100) of the pyrolysis reactor (90).

2. The ammonia synthesis apparatus (10) as claimed in claim 1, **characterized in that** the ammonia synthesis apparatus (10) comprises an air separation apparatus (120), wherein the air separation apparatus (120) comprises a nitrogen outlet (130), wherein the nitrogen outlet (130) of the air separation apparatus (120) is connected to the reactant inlet (40) of the ammonia synthesis apparatus (10).

3. The ammonia synthesis apparatus (10) as claimed in claim 2, **characterized in that** the nitrogen outlet (130) of the air separation apparatus (120) is connected to the reactant inlet (40) of the ammonia synthesis apparatus (10) via an oxygen filter apparatus (140).

4. The ammonia synthesis apparatus (10) as claimed in either of claims 2 to 3, **characterized in that** the nitrogen outlet (130) of the air separation apparatus (120) is connected to the reactant inlet (40) of the ammonia synthesis apparatus (10) via the first heat exchanger (80).

5. The ammonia synthesis apparatus (10) as claimed in either of claims 2 to 3, **characterized in that** the first heat exchanger (80) is connected to a heat transfer fluid system, wherein the nitrogen outlet (130) of the air separation apparatus (120) is connected to the reactant inlet (40) of the ammonia synthesis apparatus (10) via a second heat exchanger (280), wherein the hydrocarbon inlet (100) of the pyrolysis reactor (90) is connected to a hydrocarbon source (150), wherein the hydrocarbon inlet (100) of the pyrolysis reactor (90) is connected to a hydrocarbon source (150) via a third heat exchanger (290), wherein the second heat exchanger (280) and the third heat exchanger (290) are connected to the heat transfer fluid system.

6. The ammonia synthesis apparatus (10) as claimed in any of claims 1 to 4, **characterized in that** the hydrocarbon inlet (100) of the pyrolysis reactor (90) is connected to a hydrocarbon source (150), wherein the hydrocarbon inlet (100) of the pyrolysis reactor (90) is connected to a hydrocarbon source (150) via the first heat exchanger (80).

7. The ammonia synthesis apparatus (10) as claimed in any of the preceding claims, **characterized in that** the hydrogen outlet (110) of the pyrolysis reactor (90) is connected to the reactant inlet (40) of the ammonia synthesis apparatus (10) via a first compressor (160), wherein the reactant gas outlet (70) of the separation apparatus (30) is connected to the hydrocarbon inlet (100) of the pyrolysis reactor (90) via a decompression apparatus (170), wherein the first compressor (160) is coupled to the decompression apparatus (170).

8. The ammonia synthesis apparatus (10) as claimed in any of the preceding claims, **characterized in that** the pyrolysis reactor (90) is configured for a pressure of 1 bar to 20 bar and a temperature of 600 °C to 1500 °C.

9. A process for synthesis of ammonia from a hydrocarbon, wherein the process comprises the steps of:
a) supplying a hydrocarbon into a pyrolysis reactor (90),
b) pyrolyzing the hydrocarbon to afford carbon and hydrogen in the pyrolysis reactor (90),
c) passing the hydrogen from the pyrolysis reactor (90) into a converter (20),
d) supplying nitrogen to the converter (20),
e) converting the hydrogen and the nitrogen into ammonia in the converter (20),
f) cooling the ammonia synthesis product gas stream (210) in a first heat exchanger (80),
g) separating the ammonia from the ammonia synthesis product gas stream (210) in a separation apparatus and obtaining an ammonia synthesis reactant gas stream (220),
h) dividing the ammonia synthesis reactant gas stream (220) into a first substream (240) and a second substream (250),
i) passing the first substream (240) into the converter (20),
j) passing the second substream (250) into the pyrolysis reactor (90).

10. The process as claimed in claim 9, **characterized in that** during the supplying of the hydrocarbon in step a), said hydrocarbon is heated using the energy withdrawn from the ammonia synthesis product gas stream (210) in the first heat exchanger (80).

11. The process as claimed in either of claims 9 to 10, **characterized in that** during the supplying of the nitrogen in step d), said nitrogen is heated using the energy withdrawn from the ammonia synthesis product gas stream (210) in the first heat exchanger (80).

12. The process as claimed in any of claims 9 to 11, **characterized in that** the hydrogen stream (190) is compressed during the passing of said stream from the pyrolysis reactor (90) into the converter (20) in step c).

13. The process as claimed in claim 12, **characterized in that** the second substream (250) is decompressed, wherein the energy obtained via the decompressing is utilized for compressing the hydrogen stream (190).

14. The process as claimed in any of claims 9 to 11, **characterized in that** the pyrolysis reactor (90) and the converter (20) are operated at the same pressure.

15. The process as claimed in any of claims 9 to 13, **characterized in that** the dividing of the ammonia synthesis reactant gas stream (220) in step h) is carried out depending on the hydrocarbon content of the ammonia synthesis reactant gas stream (220).

## Revendications

1. Dispositif de synthèse d'ammoniac (10) pour produire de l'hydrogène et convertir l'hydrogène en ammoniac, le dispositif de synthèse d'ammoniac (10) comportant un convertisseur (20) pour la conversion de l'azote et de l'hydrogène en ammoniac, le dispositif de synthèse d'ammoniac (10) comportant un dispositif de séparation (30) pour séparer l'ammoniac du flux gazeux, le dispositif de synthèse d'ammoniac (10) comportant une entrée de réactifs (40) et une sortie de produits (50), le dispositif de séparation (30) comportant une entrée de mélange gazeux (60) et une sortie de gaz réactif (70), la sortie de produit (50) du dispositif de synthèse d'ammoniac (10) étant reliée à l'entrée de mélange gazeux (60) du dispositif de séparation (30), la sortie de gaz réactif (70) du dispositif de séparation (30) étant reliée à l'entrée de réactif (40) du dispositif de synthèse d'ammoniac, la sortie de produit (50) du dispositif de synthèse d'ammoniac (10) étant reliée à l'entrée de mélange gazeux (60) du dispositif de séparation (30) par l'intermédiaire d'un premier échangeur de chaleur (80), **caractérisé en ce que** le dispositif de synthèse d'ammoniac (10) comprend un réacteur de pyrolyse (90) pour la conversion d'hydrocarbures en carbone et en hydrogène, le réacteur de pyrolyse (90) comprenant une entrée d'hydrocarbures (100) et une sortie d'hydrogène (110), la sortie d'hydrogène (110) du réacteur de pyrolyse (90) étant reliée à l'entrée d'éduits (40) du dispositif de synthèse d'ammoniac (10), la sortie de gaz d'éduits (70) du dispositif de séparation (30) étant reliée à l'entrée d'hydrocarbures (100) du réacteur de pyrolyse (90).

2. Dispositif de synthèse d'ammoniac (10) selon la revendication 1, **caractérisé en ce que** le dispositif de synthèse d'ammoniac (10) comprend un dispositif de séparation d'air (120), le dispositif de séparation d'air (120) comportant une sortie d'azote (130), la sortie d'azote (130) du dispositif de séparation d'air (120) étant reliée à l'entrée de réactif (40) du dispositif de synthèse d'ammoniac (10).

3. Dispositif de synthèse d'ammoniac (10) selon la revendication 2, **caractérisé en ce que** la sortie d'azote (130) du dispositif de séparation d'air (120) est reliée à l'entrée de réactifs (40) du dispositif de synthèse d'ammoniac (10) via un dispositif de filtration d'oxygène (140).

4. Dispositif de synthèse d'ammoniac (10) selon l'une des revendications 2 à 3, **caractérisé en ce que** la sortie d'azote (130) du dispositif de séparation d'air (120) est reliée à l'entrée de réactifs (40) du dispositif de synthèse d'ammoniac (10) par l'intermédiaire du premier échangeur de chaleur (80).

5. Dispositif de synthèse d'ammoniac (10) selon l'une des revendications 2 à 3, **caractérisé en ce que** le premier échangeur de chaleur (80) est relié à un système de fluide caloporteur, la sortie d'azote (130) du dispositif de séparation d'air (120) étant reliée à l'entrée de réactif (40) du dispositif de synthèse d'ammoniac (10) par l'intermédiaire d'un deuxième échangeur de chaleur (280), l'entrée d'hydrocarbure (100) du réacteur de pyrolyse (90) étant reliée à une source d'hydrocarbure (150), l'entrée d'hydrocarbures (100) du réacteur de pyrolyse (90) étant reliée à une source d'hydrocarbures (150) par l'intermédiaire d'un troisième échangeur de chaleur (290), le deuxième échangeur de chaleur (280) et le troisième échangeur de chaleur (290) étant reliés au système de fluide caloporteur.

6. Dispositif de synthèse d'ammoniac (10) selon l'une des revendications 1 à 4, **caractérisé en ce que** l'entrée d'hydrocarbures (100) du réacteur de pyrolyse (90) est reliée à une source d'hydrocarbures (150), l'entrée d'hydrocarbure (100) du réacteur de pyrolyse (90) étant reliée à une source d'hydrocarbure (150) par l'intermédiaire du premier échangeur de chaleur (80).

7. Dispositif de synthèse d'ammoniac (10) selon l'une des revendications précédentes, **caractérisé en ce que** la sortie d'hydrogène (110) du réacteur de pyrolyse (90) est reliée à l'entrée de réactif (40) du dispositif de synthèse d'ammoniac (10) par l'intermédiaire d'un premier compresseur (160), la sortie de gaz réactif (70) du dispositif de séparation (30) étant reliée à l'entrée d'hydrocarbures (100) du réacteur de pyrolyse (90) par l'intermédiaire d'un dispositif de détente (170), le premier compresseur (160) étant couplé au dispositif de détente (170).

8. Dispositif de synthèse d'ammoniac (10) selon l'une des revendications précédentes, **caractérisé en ce que** le réacteur de pyrolyse (90) est conçu pour une pression comprise entre 1 bar et 20 bars et une température comprise entre 600 °C et 1500 °C.

9. Procédé de synthèse d'ammoniac à partir d'un hydrocarbure, lequel procédé comprend les étapes suivantes :
a) introduction d'un hydrocarbure dans un réacteur de pyrolyse (90),
b) pyrolyse de l'hydrocarbure en carbone et en hydrogène dans le réacteur de pyrolyse (90),
c) conduite de l'hydrogène provenant du réacteur de pyrolyse (90) dans un convertisseur (20),
d) alimentation du convertisseur (20) en azote,
e) conversion de l'hydrogène et de l'azote en ammoniac dans le convertisseur (20),
f) refroidissement du flux gazeux de synthèse d'ammoniac (210) dans un premier échangeur de chaleur (80),
g) séparation de l'ammoniac du flux gazeux de synthèse d'ammoniac (210) dans un dispositif de séparation et obtention d'un flux gazeux de synthèse d'ammoniac (220),
h) division du flux gazeux de produit de synthèse d'ammoniac (220) en un premier flux partiel (240) et un deuxième flux partiel (250),
i) acheminement du premier flux partiel (240) dans le convertisseur (20),
j) acheminement du deuxième flux partiel (250) dans le réacteur de pyrolyse (90).

10. Procédé selon la revendication 9, **caractérisé en ce que,** lors de l'alimentation en hydrocarbure à l'étape a), celui-ci est chauffé à l'aide de l'énergie extraite du flux gazeux de produit de synthèse d'ammoniac (210) dans le premier échangeur de chaleur (80).

11. Procédé selon l'une des revendications 9 à 10, **caractérisé en ce que** lors de l'alimentation en azote à l'étape d), celui-ci est chauffé à l'aide de l'énergie extraite du flux gazeux de produit de synthèse d'ammoniac (210) dans le premier échangeur de chaleur (80).

12. Procédé selon l'une des revendications 9 à 11, **caractérisé en ce que** le flux d'hydrogène (190) est comprimé lors de son passage du réacteur de pyrolyse (90) vers un convertisseur (20) à l'étape c).

13. Procédé selon la revendication 12, **caractérisé en ce que** le deuxième flux partiel (250) est détendu, l'énergie obtenue par la détente étant utilisée pour comprimer le flux d'hydrogène (190).

14. Procédé selon l'une des revendications 9 à 11, **caractérisé en ce que** le réacteur de pyrolyse (90) et le convertisseur (20) sont exploités à la même pression.

15. Procédé selon l'une des revendications 9 à 13, **caractérisé en ce que** la division du flux de gaz de synthèse d'ammoniac (220) à l'étape h) s'effectue en fonction de la teneur en hydrocarbures du flux de gaz de synthèse d'ammoniac (220).
